# EUROPEAN PATENT APPLICATION

(11) **EP 1 772 398 A1**
(43) Date of publication of application: **11.04.2007**
(21) Application number: 05109370.6
(22) Date of filing: 07.10.2005
(51) Int. Cl.: B65D 85/804

(54) **Cartridge for use with a device for preparing an infused beverage**

(71) Applicant: Cense d'Almez S.A., 1325 Corroy le Grand (BE)
(72) Inventor: Van Belleghem, Luc, 1332, Genval (BE)
(74) Representative: Quintelier, Claude

(57) **Abstract**

The invention relates to a cartridge containing infusible substance for use in a device for preparing infused beverage. The cartridge comprises a bottom part provided with a filter adapted to let liquid pass through and a top part (38) provided with an opening. Side walls are joining the bottom and top parts. The bottom part forms a recess arranged toward the inside of the cartridge, the surface of the recess comprising an actuating surface for actuating a mechanism of the device.

## Description

### Field of the invention

The invention relates to a cartridge containing infusible substances for use in a device for preparing infused beverage. The cartridge comprises a bottom part provided with a filter adapted to let liquid pass through and a top part provided with an opening. Side walls are joining the bottom and top parts.

As a matter of example, the infusible substance can alternatively be tea leaves, various different herbs and spices, herbal tea, flower petals, leaves, seeds, roots, powder, coffee or other materials capable of being infused.

### Description of prior art

Such cartridges are known in the art.

For instance, Japanese patent application JP 2001-120436 discloses a tea preparation device comprising an infusion tank which can be filled with hot water, and a holder which can communicate with the tank through a communication aperture. A passage communicates with the tank for pouring out the infused tea. A cartridge is used and contains tea leaves. The cartridge has a removable top seal.

In use, the tea leaf cartridge is inserted in the holder. The cartridge top seal is removed when the holder is inserted in the device. The opened cartridge in the holder is moved under the tank. Then, while the opening is turned toward the interior of the tank, the tea leaves contained in the cartridge are able to move and float freely into the infusion tank, once water is introduced in the tank and holder. The infusion then takes place. A stirring mechanism comprising a rod partially immerged in the infusion tank can be operated to stir the water while infusing.

A drainage hole in the holder and the passage are arranged to discharge the infused tea from the tank to a discharge container and the cartridge is entirely or partially formed as a filter. That is, once the infusion is completed, the tank is emptied and the tea leaves return in the cartridge and settle there.

The disclosed device provides easy setting up and preparation of a liquid infusion in a traditional way during which tea leaves are allowed to float freely in the liquid, and it also provides easy handling of the used infusible substance, such as tea leaves, in the cartridge itself forming a filter.

The device disclosed in the prior art presents a security problem in the sense that a user may start the device, even if no cartridge has been introduced in the machine. If it is the case, the infusion container must be emptied. Either the infusion container needs to be removed and emptied manually. Or water needs to be evacuated in the discharge container. In that case, infusion already contained in the discharge container is diluted, impairing its taste and flavour.

Another drawback of the device comes from the fact that the liquid infusion is stored in a discharge container. Because the liquid infusion stored in the discharge container continues infusing, its taste and flavour is impaired.

It has also been found that not all tea leaves contained in the cartridge are able to move and float freely into the infusion tank. Some leaves tend to remain within the cartridge preventing the liquid from infusing properly.

### Summary of the invention

It is an object of the invention to provide a cartridge for infusible substances for use in a device for preparing infused beverage according to which the functioning of the device is safe.

To this end, the bottom part of the cartridge forms a recess arranged toward the inside of the cartridge, the surface of the recess comprising an actuating surface for actuating a mechanism of the device.

The cartridge is mainly but not necessarily adapted for being slot in the following device for preparing infusion beverage. The device includes an infusion container for containing liquid and comprising an opening to allow liquid to flow out of the container. The device includes a receptacle defining a cavity for receiving a cartridge containing infusible substances. The infusion container and the receptacle are operable in relation to each other to be arranged in a position wherein the infusion container and the cavity communicate through the opening. Infusible substances contained in the cartridge are immersed once liquid is poured into the infusion container to the cavity; the infusible substances are able to move and float freely in the infusion chamber. The infusion takes place.

The device further comprises an openable and closable passage communicating with the cavity. Once the infusion is completed, the passage is opened and the infused liquid flows from the infusion container to the passage through the cavity and the filter of the cartridge. The infused liquid may be poured directly in a cup.
If no cartridge is inserted in the device, at least one mechanism of the device is not actuated. The functioning of the device may be paused or stopped. Such security mechanism prevents a user to operate the device when no cartridge is introduced.

It is an object of the invention to provide a cartridge for infusible substances for use in a device for preparing infused beverage according to which all substances contained in the cartridge are efficiently used for preparing the beverage.

To this end, the recess is provided with at least an opening for letting gas pass through.

The device for preparing infused beverage may comprise an injecting means for injecting gas in the infusion container. The recess of the cartridge constitutes a space or compartment into which the means for injecting gas, such as an injection nozzle, may be located. The injecting means injects gas in the cartridge through the opening of the recess.

In use, when the cartridge is slot within a device for preparing infused beverage, the injection means is inserted in the recess. Gas is injected in the infusion container through the cartridge. The infusible substances are pushed out of the cartridge to float within the infusion container. The infusible substances are prevented from remaining within the cartridge while the infusion takes place.

Preferably, the opening is disposed in the recess to face an opening of the injection means through which gas is injected. The size of the opening of the recess is substantially equal to that of the injection opening. The gas is properly injected in the infusion container through the cartridge. It avoids gas pockets from developing in the device around the cartridge; such gas pockets could damage the cartridge or create tensions within the device.

It is known to the skilled person that tea infusion takes place in three stages. Firstly the caffeine contained in tea leaves is diffused to the liquid, then all aromas giving the infusion its flavour and finally the tea leaves release their acid tannins. If the tea leaves are infused too long or at a wrong temperature, the effect of either the first or the second stage are annihilated, the tannins destroying either the caffeine or the aromas.

The infusion takes place around the tea leaves and water located immediately around the leaves becomes rapidly saturated. The infusion process slows down and the three stages of the process are partially or not properly performed; Water around the leaves is highly concentrated in caffeine and poorly concentrated in aromas.

To prevent such an effect, gas may be injected within the infusion container through the cartridge, while the infusion takes place to stir the liquid and homogenize the infusion.

The introduction of oxygen further provides the advantage of improving the quality of infused tea beverage. It is known that water when heated up looses oxygen, which has effect on the taste of the tea. Oxygenating the liquid while it infuses restores a normal oxygen concentration to water and ensures a high quality taste for the infused tea.

In another embodiment, openings for letting a gas pass through, arranged in the side walls of the cartridge may be used as well. Openings in the recess have been found to be more efficient for pushing infusible substances out of the cartridge and for uniformly agitating and oxygenating the liquid during infusion.

In one embodiment, the recess has a substantially cylindrical or frustroconical form defining recess side walls and a recess top. The at least one opening of the recess is provided through the recess side walls, or/and through the recess top.

Preferably, the recess has a circular bottom section with a diameter comprised between 2 and 15 millimetres, or more particularly between 2 and 6 millimetres. Such a range consists of an optimal compromise between a recess large enough to provide sufficient space for the injection means of the device and a recess small enough to provide a sufficient surface for liquid to flow out of the cartridge through the filter.

It is an object of the invention to provide a cartridge for infusible substances for use in a device for preparing infused beverage which may be firmly maintain in the device. To this end, the top part of the cartridge comprises a lip surrounding the opening of the top part. The lip may be trapped in a gripping mechanism of the device. It is important that the cartridge is correctly and firmly hold within the cavity to insure that the actuating surface of the recess the injection means of the device remains located in the recess of the cartridge. Failure to do so could result to gas pockets developing and creating unnecessary tensions within the device.
Preferably, the cartridge has a substantially cylindrical or frustroconical form. A cartridge of such a form can easily be slot and steadily maintained within a cavity of a complementary shape. Cartridge of different forms, for instance semi-spherical forms may not fit so properly within a cavity and may slide in one direction or another.
A cartridge of such a form is also easy to manufacture, whether the cartridge is made of plastic material and moulded or made of metal and stamped by application of a mould, form, or die. Preferably, the angle formed by the side walls and the bottom part is comprised between 90 degrees and 100 degrees, or more particularly between 93 degrees and 97 degrees.

In one embodiment, the filter consists of a sheet made of aluminium perforated. Food contact approved aluminium may be used. Alternatively, the inner surface of the filter may be covered with a food contact approved coating layer able to resist to temperatures at least up to 100°C during several minutes. Alternatively, the filter consists of at least a sheet made of wool or of any natural or synthetic material adapted to infusion and filtering.

Preferably the cartridge is made of aluminium. Food contact approved aluminium may be used. Alternatively, the inner surface of the cartridge may be covered with a food contact approved coating layer able to resist to temperatures at least up to 100°C during several minutes.

It is a further object of the invention to provide a cartridge containing infusible substances which may be easily manipulated. To this end, the opening of the top part of the cartridge is provided with and closed by a sheet, arranged toward the outside of the cartridge with respect of the opening.
The opening of the cartridge is closed, its content being securely enclosed. The sheet may be automatically cut in the device for preparing infused beverage.

It is a further object of the invention to provide a cartridge which contents is protected from humidity, air and light. To this end, the bottom part of the cartridge is further provided with and closed by a removable sheet, arranged toward the outside of the cartridge with respect of the filter.
The content of the cartridge is protected from air, light and humidity. The removable sheet may be removed manually just before the cartridge is to be used; the flavour and aromas of the infusible substance may be preserved until then. The infusible substance may also be vacuum-packed.

According to one embodiment, the cartridge includes automatic readable means adapted to be read or detect by a detecting or reading means. The readable means may comprise and/or inform on preparation parameters for indicating how to infuse the infusible substance of the cartridge at best.

Advantageously, the preparation parameters may consist of the infusion temperature and/or the infusion duration and/or when the gas injection takes place, how long it lasts, etc.

### Short description of the drawings

These and further aspects of the invention will be explained in greater detail by way of example only and with reference to the accompanying drawings in which:
- Fig.1a: shows a perspective top view of a cartridge according to one embodiment for use in a device for preparing infused beverages;
- Fig.1b: shows a perspective bottom view of a cartridge according to one embodiment;
- Fig.1c: shows a perspective side view of a cartridge according to one embodiment;
- Fig.1d: shows a perspective side view of the bottom part of a cartridge according to one embodiment;
- Fig.1e: shows a cross-sectional side view of the cartridge according to one embodiment;
- Fig.1f: shows a cross-sectional side view of the cartridge according to another embodiment;
- Fig.2: shows a perspective front view of a device for preparing infused beverages in which a cartridge according to the invention is used;
- Fig.3: shows a detailed perspective side view of the device;
- Fig.4: shows a perspective front view of the inside of the device for preparing infused beverages;
- Fig.5: shows a perspective back view of the inside of the device for preparing infused;
- Fig.6: shows a perspective side view of the inside of the device for preparing infused;
- Fig.7: shows a perspective top view of a receptacle of the device for receiving cartridge;
- Fig.8: shows a schematic section of a receptacle of another device for receiving a cartridge;
- Fig.9a-e: shows a mechanism for opening a cartridge located inside the device.
- Fig.10a-c: shows a mechanism for withdrawing a cartridge according to the invention from a device for preparing infused beverage;

The figures are not drawn to scale. Generally, identical components are denoted by the same reference numerals in the figures.

### Detailed description of preferred embodiments

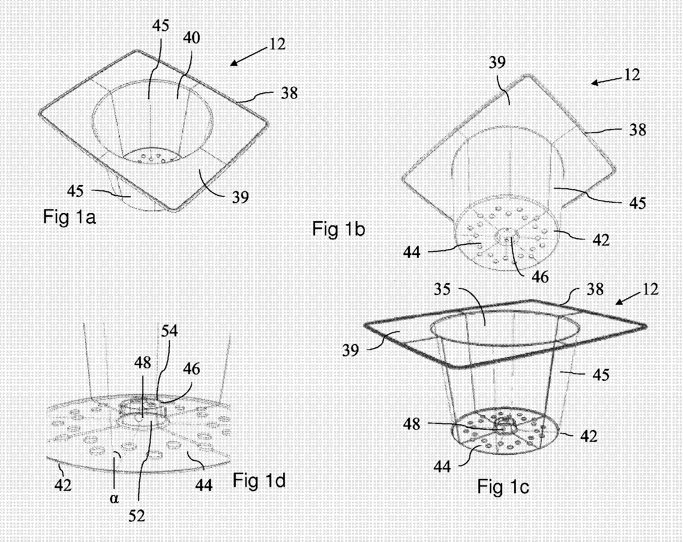

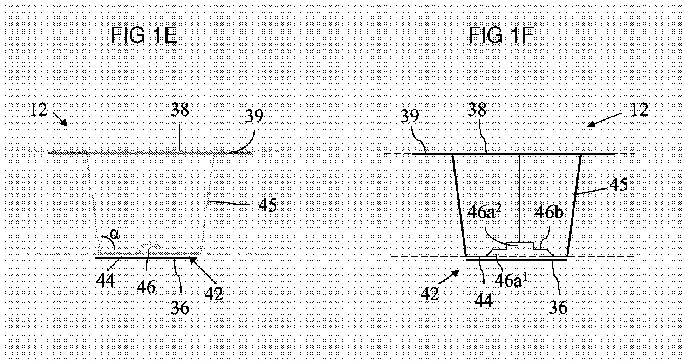

A cartridge 12 according to the invention is explained in respect with **figures 1a, 1b, 1c, 1d, 1e.** The cartridge 12 comprises a bottom part 42 provided with a filter 44 adapted to let liquid pass through, a top part 38 provided with an opening 35 and side walls 45 joining the bottom and top parts 42, 38 . It defines an inner volume 40 to contain infusible substances 12. The volume 40 is calculated so to receive enough infusible substances 12 for preparing a standard cup of infused beverages. Infusible substances when soaked tend to swell. The volume 40 is also calculated to contain all the swollen infusible substances once infused.

The cartridge 12 is cone-shaped, truncated at the level of the bottom part 42. In one embodiment, the section of the top and bottom part 38, 42 is circular or oval. The section of the opening 35 is circular or oval. The angle α formed by the side walls 45 and the bottom part 42 is between 90 and 100 degrees and preferably comprised between 93 and 97 degrees. In another embodiment, the cartridge 12 is cylindrical.

Such a shape allows creating an inner volume 40 big enough to contain enough infusible substances for preparing a standard cup of beverage. Such shape allows the cartridge 12 to be steadily inserted within the cavity 16. It is also perfectly suitable to ensure a perfect fit between the cartridge 12 and the cavity 16.

The side walls of the cartridge 12 are air- and waterproof and opaque to be impermeable to water, air and light. The cartridge 12 is preferably made of aluminium. Food contact approved aluminium may be used. Alternatively, the inner surface of the cartridge 12 may be covered with a food contact approved coating layer able to resist to temperatures at least up to 100°C during several minutes.

Preferably, the filter 44 is as part of the cartridge 12 and consists of a perforated sheet made of aluminium. Food contact approved aluminium may be used. Alternatively, the inner surface of the filter 44 may be covered with a food contact approved coating layer.

Alternatively, the filter 44 may consist of at least a sheet made of wool or of any natural or synthetic material adapted to infusion and filtering. It is attached in a conventional manner to the bottom part 42, preferably on the inner walls of the cartridge 12.

The top part 38 comprises a lip 39 surrounding the opening 35 at least partly. The lip 39 rests upon the rim of the receptacle 10. The opening 35 is closed and covered by a sheet 50 (not represented) arranged towards the outside of the cartridge. Preferably the sheet 50 is made of aluminium and is heat-sealed to the lip 39 in a conventional manner.

In one embodiment, the top part 38 may be covered by a filter (not represented) arranged towards the outside of the cartridge 12. The sheet 50 covers the filter. The filter consists of an extensible or deformable sheet made of wool or of any natural or synthetic material adapted to infusion and filtering. When a cartridge 12 comprising such filter is immersed in water, the filter spreads in water out of the cartridge; the filter creates a space in water where infusible substances 14 contained in the cartridge 12 are able to float. Such filter prevents from infusible substances 14 from scattering everywhere in the infusion container 6 in particular and in the device in general.

The bottom part 42 is recovered by a removable sheet 36, arranged towards the outside of the cartridge 12 with respect to the filter 44. The removable sheet 36 may be heat-sealed or glued to the cartridge 12 in a conventional manner. It is made of aluminium or of any other food approved material. The removable sheet 36 comprises a prehension means (not shown), so a user can grasp and remove it from the cartridge 12.

The sheets 36 and 50 hermetically close and vacuum-pack the inner contents 40 of the cartridge 12. The infusible substances 12 are protected from air and humidity. Both sheets 36, 50 and cartridge 12 are preferably made of an opaque material to protect its contents 14 for light as well.

The cartridge 12 may comprise marks or any automatic readable means comprising or indicating infusion parameters. The marks or readable means may be located either on the outside surface of the side walls 45 or on the lip 39 or on the sheet 50.

In one embodiment, the bottom part 42 includes a recess 46 arranged toward the inside of the cartridge 12. The recess 46 is frustrocone-shaped, the larger section of the recess 46 being at the level of the bottom part 42. The larger section of the recess 46 has a diameter comprised between 2 and 15 millimetres, or more particularly between 2 and 6 millimetres.

The recess 46 comprises openings 48 for letting gas pass through. In one embodiment, four openings 48 are located on the side walls 52 and one on the top part 54 of the recess 46. As a matter of example, the four openings 48 on the side walls are arranged symmetrically with respect of the axis of the recess 48.

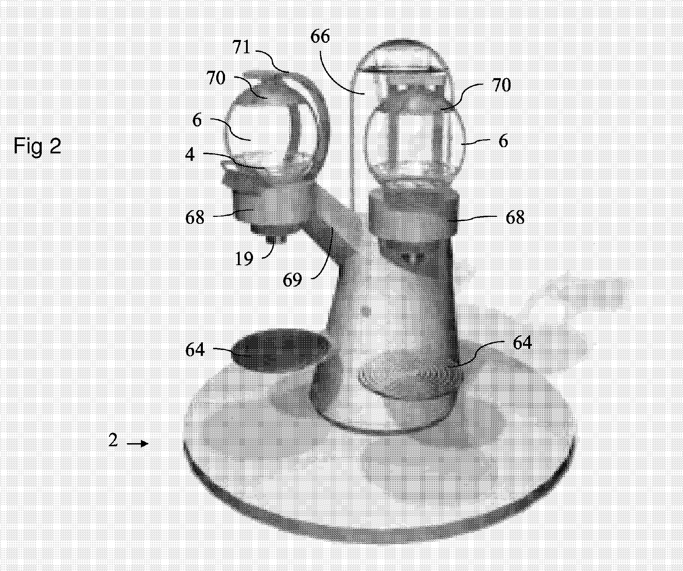

**Figure 2** shows a perspective front view of a device for preparing infused beverages which uses cartridges according to the invention.

The device 2 comprises a removal reservoir 66 containing liquid and two infusion containers 6 for containing liquid 4. The infusion container 6 is designed to simultaneously contain air and enough water for a normal cup of beverage. Alternatively, the infusion container 6 is designed to contain several cups of beverage.

The infusion container 6 is disposed on a platform 68 connected to the device 2 via a supporting arm 69. A removable holding cap 70 is clipped on top of the container 6. An opening (not represented) is located on top of the container 6 and is closed by the holding cap 70. A pair of arc-shaped arms 71 connects the holding cap 70 to the platform 68. The container 6 is securely held between the platform 68 and the holding cap 70. The supporting arm 69, the holding cap 70, the pair of arms 71 enclose various conduits for gas and liquid to flow between the infusion container 6 and other internal elements of the device 2.

An opening 8 (not represented) is provided at the bottom of the container 6 to allow liquid 4 to flow out of the container 6.

The platform 68 comprises a spout 19, through which the infused beverage is poured out of the device 2. The spout 19 opens above a cup support 64. The cup support 64 is adapted to hold a cup or any similar container to collect the infused beverage poured from the spout 19 directly.

The device 2 may be adapted to prepare simultaneously one, two or more infused beverages at a time. The device 2 comprises a corresponding number of infusion containers 6 and accompanying parts.

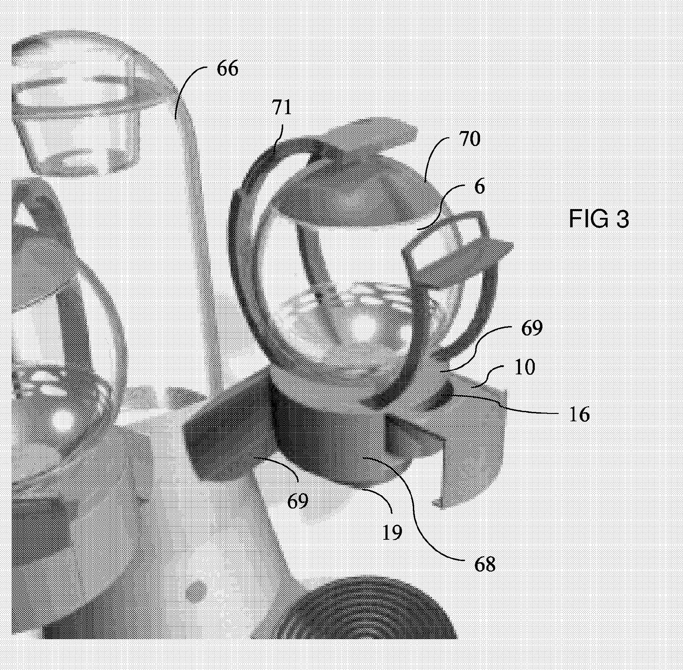

Referring now to **figure 3**, the platform 68 comprises a receptacle 10 for receiving a cartridge 12 containing infusible substances 14. In this particular embodiment, the receptacle 10 consists of a drawer. The drawer 10 is operable between at least a first position and a second position. The drawer 10 slides from a closed position in the platform 68 to an opened position out of the platform 68. The drawer comprises a cavity 16 into which a cartridge 12 (not represented) containing infusible substances may be inserted. The drawer 10 may slide either automatically or manually. When the drawer 10 is closed in the platform 68, the cavity 16 of the drawer 10 communicates with the bottom opening 8 of the infusion container 6, so that the infusion container 6 and the cavity 16 form an infusion chamber.

The cavity 16 of the drawer 10 is connected to a passage 18 (not represented) located in the platform 68. An actuated valve allows closing and opening the passage 18. When the passage 18 is opened, liquid flows out of the infusion container 6 through the cavity 16 to the passage 18. When the passage 18 is closed, the infusion chamber formed by the cavity 16 and the infusion container 6 is closed. The passage 18 is connected to the spout 19 as well as to a conduit for waste water described below through actuated valves. Liquid flowing into the passage may be directed either to the conduit for waste water or to the spout 19.

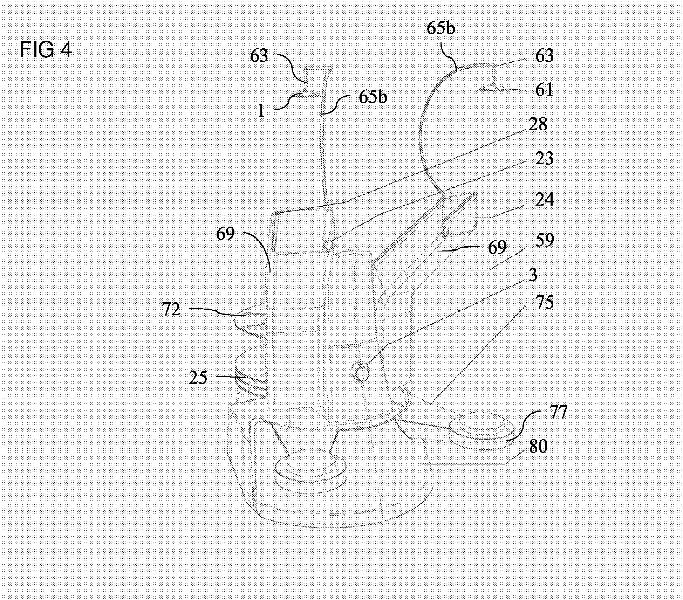

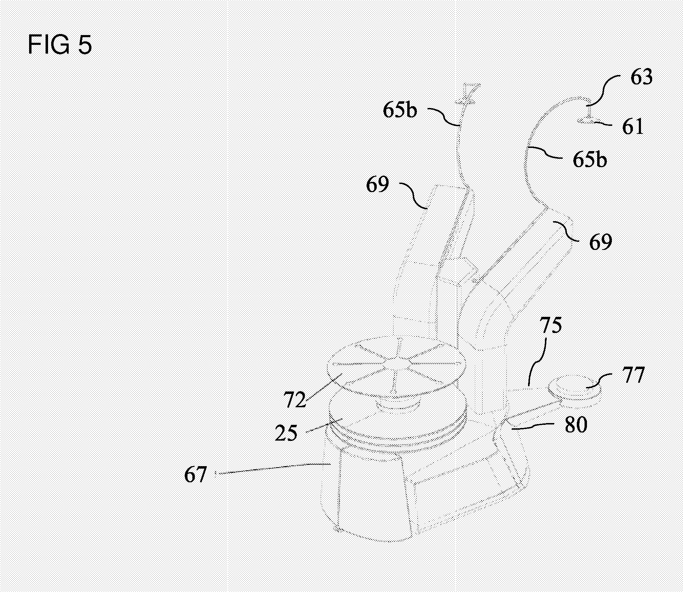

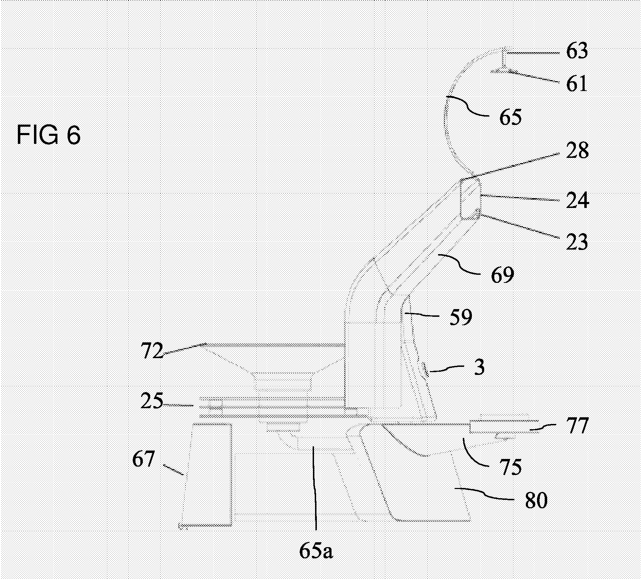

The device 2 for preparing infused beverage is now described in respect with **figures 4, 5, 6**.

The device 2 comprises a support 72 for the reservoir 66. The support 72 comprises an opening where the valve-cap of the reservoir 66 is plugged, giving access to the water contained in the reservoir 66.

The support 72 is connected to a conduit 65a, creating a flow path for water from the reservoir 66. The conduit 65a is connected to a series of conduits 65b, via a system of actuated valves, to transfer water to respective infusion container 6. The conduit 65b is located within one of the pair of arms 71. A sprinkler 63 with several outlets 61 is disposed at one extremity of the conduit 65b. The sprinkler 63 is located within the holding cap 70 and is plugged into an opening located at the top of the infusion container 6. A pump 67 is used for the transfer of water from the conduit 65a to the conduits 65b.

The device 2 further comprises a heating chamber 59 to heat water. The device comprises an air or gas inlet pipe 28 located within the arm 69 and the platform 68. The gas inlet pipe 28 is adapted to deliver pressurised gas. The pump 67 is used for ejecting pressurised gas into one of the inlet pipe extremity. The pump 67 is actuated to control the pressure of the gas at the inlet.

The device 2 further comprises a conduit 23 to collect waste water from the infusion container 6. The conduit 23, connected at one extremity to a waste container (not represented) located within the device 2 and travels within the arm 69 and the platform 68. Its other extremity is located within the platform 68.

The device 2 further comprises a conduit 24 to collect used cartridges from the receptacle 10. The conduit 24 is located in the arm 70 and opens above the waste container.

In a manner known, the device 2 further comprises a sensor to detect the presence of a cup on one of the cup holder 64, a set of control knobs 3 for the user to operate the device 2, an operating means comprising a processing means to electronically control and operate all mechanisms of the device 2. The processing means includes a printed circuitry 25 and memory to store data for use by the processing means.

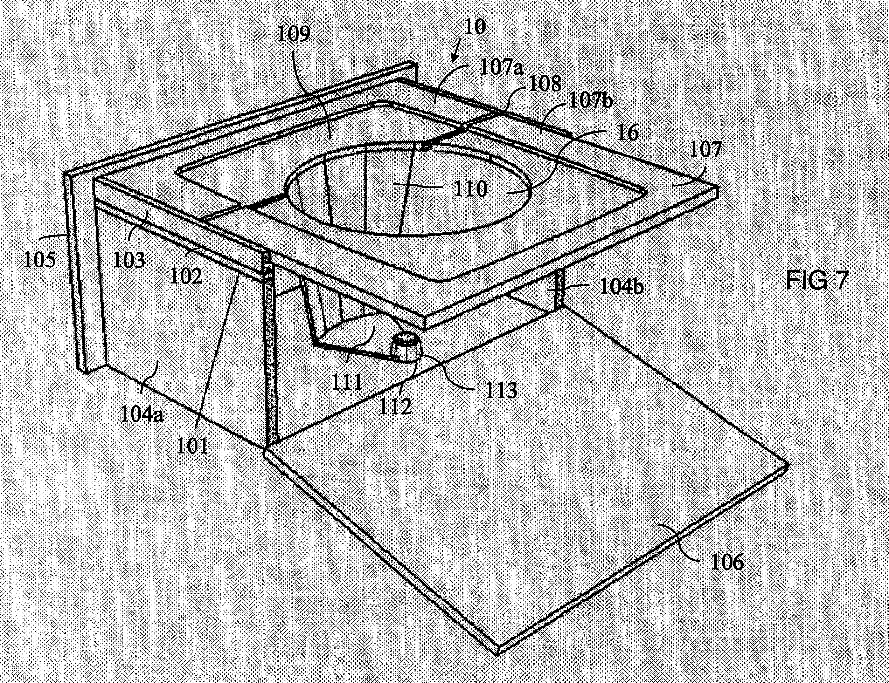

The receptacle 10 of the device 2 is now explained in respect with **figure 7**.

The receptacle 10 consist of a drawer comprising a front panel 105, a tray 107. The drawer 10 slides along two side panels 104a and 104b located inside the platform 68. A multiple runner mechanism 101,102,103 is disposed on the top edge of both side panels 104a, 104b.

The tray 107, removably linked to the side panels 104a, 104b through the multiple runner mechanism, slides along the side panels 103, 104. A mechanism located in the platform 68 is provided to rise up and support the tray 107 away from the side panels 104a, 104b. The tray 107 is formed by two panels 107a and 107b hinged to each other through a hinge 108. The hinge 108 is disposed perpendicular to the sliding direction of the tray 107.

The tray 107 comprises a cavity 16 adapted to receive a cartridge 12. The cavity 16 comprises partial side walls 110 connected to the first panel 107a of the tray 107 and a partial bottom part 111 connected to the side walls 110. The partial side walls and bottom part 110 and 111 are disposed towards the front panel 105 and underneath the first panel 107a only. The partial side walls 110 and the partial bottom part 111 form a partial cone or cylinder, truncated at the level of the bottom part 111. The dimensions of said partial cone are slightly larger than those of the cartridge 12, so that the cartridge 12 perfectly fit into the cavity 16.

A protruding nozzle 112, preferably cylindrical or frustrocone-shaped, is located on the bottom part 111 towards the inside of the cavity 16. The dimensions of protruding nozzle 112 are such that the recess 46 of a cartridge 12 inserted in the cavity 16 perfectly fits the protruding nozzle 112. The protruding nozzle 112 comprises openings 113 injecting gas towards the inside of the cavity 12. The openings 113 are disposed in the protruding nozzle 112 in such way that the openings in the recess of a cartridge 12 inserted in the cavity face the injection opening 113. In one embodiment, four openings 113 are located on the side walls of the nozzle 112 and one on its top part 54.

The protruding nozzle 112 is connected to a conduit 29 (not represented) located within the bottom part 111 of the cavity 16. Alternatively, the conduit 29 may be located on the surface of the bottom part 111 either towards the inside of the cavity 16 or the outside of the cavity 16. The conduit 29 is connected to gas inlet pipe 28.

In another embodiment, the protruding nozzle 112 may be located on the partial side walls 110 of the cavity 16.

A recess 109 is disposed on the top surface of the tray 107 around the top edges of cavity 16. The section of the recess 109 is slightly larger than that of the lip 39 of cartridges 12 so that the lip 39 of a cartridge 12 received in the cavity 16 perfectly slots the recess 109.

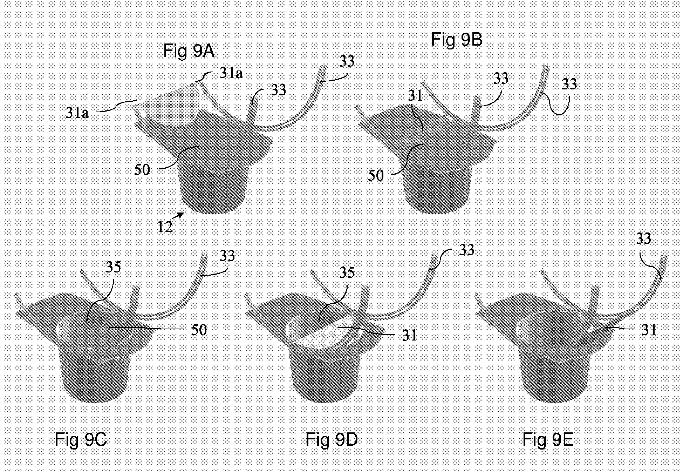

A mechanism to automatically open a cartridge according to the invention, while the drawer 10 slides into the platform 68, is now described with reference to **figures 9a to 9e**.

The device 2 comprises a pair of parallel arc-shaped bars 33 between which a flat blade 31 is attached. The blade 31 is fixely attached tangent to the cylindrical surface formed between the arc-shaped bars 33. The blade 31 is preferably a semi-circular or semi-oval blade, its straight side being connected to the arc-shaped bars 33 through rods 31a. The small and long diameters of the blade 31 are slightly smaller than these of the opening 35 of the cartridge 12.

The arc-shaped bars 33 rotate around the infusion container 6 through the platform 68 and within the pair of arc-shaped arms 71. The sliding movement of the drawer 10 in the platform 68 is linked to the movement of the arc-shaped bars 33.

The arc-shaped bars 33 are positioned tangent to the sliding direction of the receptacle 10. The arc-shaped bars 33 are located tangent to the tray 107 of the drawer 10 and on each side of the top part of cavity 16 of the drawer 10.

Figure 9a shows the position of the blade 31 in relation to the cartridge 12, when the drawer 10 starts sliding into the platform 68. The arc-shaped bars 33 rotate and soon the lip 29 of the cartridge 12 is trapped between the arc-shaped bars 33 and the recess 109 of the tray 107. The edge of the blade 31 touches and pierces the first sheet 50 inside the opening 35 of the cartridge 12 close to the opening edge. Figure 9b to 9d shows the position of the blade 31 in relation to the cartridge 12, while the drawer 10 keeps on sliding into the platform 68. The arc-shaped bars 33 keep on rotating; the blade 31 follows a circular movement in and out of the cartridge 12 cutting the sheet 50 close to the edge of the opening 35. It is important that the cartridge 12 is remained blocked in the cavity 12 between the arc-shaped bars 33 and the recess 109 of the tray 107, so that the blade 31 may perform a proper and efficient cut of the sheet 50.

Figure 9e shows the position of the blade 31 in relation to the cartridge 12, when the drawer 10 reaches its final position in the platform 68. When the blade 31 moves out of the cartridge 12, it pushes away of the cartridge 12 the part of the sheet 31 it just cut out. The cut out part remains partially attached to the sheet 31. The whole opening 35 is accessible.

In another embodiment, the cut out part of the sheet 50 is entirely separated from the sheet 50 and is dragged away by the blade 31, when the blade 31 moves out of the cartridge 12. The cut out part falls by gravity onto the ejection chute 106 and is collected within the second waste container 78.

The blade 31 could be of any shape adapted to the section of the opening 35. The dimensions of the blade need to be smaller than these of the opening 35, to allow the blade 31 to slide in and out of the cartridge 12 via the opening 35 and to cut the sheet 50.

Once the drawer 10 is closed within the platform 68 and once the top sheet 50 of the cartridge 12 has been cut out, the tray 107 is raised up away from the side panels 104a, 104b. The lip 39 of the cartridge 12 located in the recess 109 of the tray 107 is brought into contact with the bottom opening 8 of the infusion container 6. A gasket 84 disposed on the edge of the bottom opening 8 ensures a hermetic connection between the infusion container 6 and the lip 39. The cartridge 12 is firmly maintained blocked within the cavity 16.

The dimensions of the opening 8 of the infusion container 6 are equal or larger than those of the section of the cavity 16 on the tray 107 to surround the opening 35 of the cartridge 12. The dimensions of the opening 8 of the infusion container 6 are smaller than those of the section of the recess 109 of the tray 107.

The device 2 further comprises a movable snapping insert 81 (not represented) located in the platform 68. The movement of the insert 81 is controlled by the operating means of the device 2. The insert 81 is operated to be brought to contact with the cavity 16 of the tray 107. The insert 81 is adapted to fit exactly together with the edge of the side walls 110 of the cavity 16 and with the bottom part 111 of the cavity 16. The insert 81 is also adapted to fit together with the bottom surface of the tray 107. A gasket 83 (not represented) may be disposed on each part of the insert 81 adapted to contact the cavity 16. The insert 81 is connected to the passage 18.
Once the drawer 10 is closed within the platform 68 and once the tray 107 has been brought to contact with the bottom opening 8 of the infusion container 6, the insert 81 is operated and brought to contact with the cavity 16, so the cavity 6 and the insert 81 fit exactly together. The gasket 83 ensures that the surfaces of contact between the insert 81, the cavity 16 and the tray 107 are hermetic. The infusion container 6, the tray 107 the cavity 16 and the insert 81 form a hermetic infusion chamber closed by the passage 18.

A mechanism for ejecting from the cavity of the drawer 10 a cartridge according to the invention is now explained in respect with **figures 10a to 10c.**

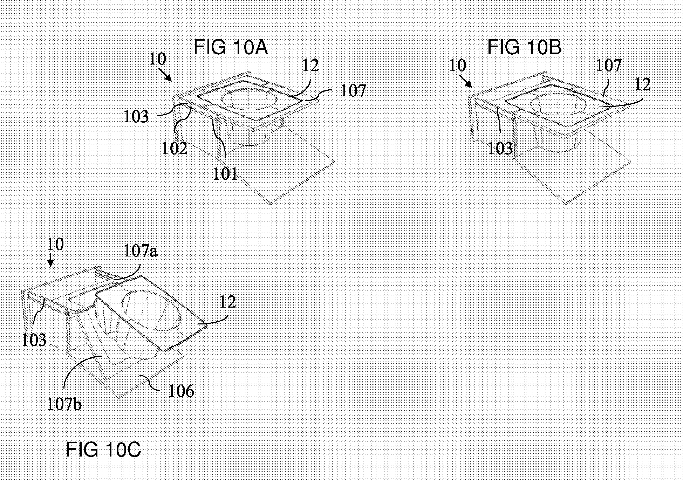

Figure 10a shows the drawer 10 closed within the platform 68 in the first position. Fig. 10b shows the tray 107 in an intermediate position, sliding on the side panel 104a, 104b towards the inside of the platform 68. Fig. 10c shows the tray 107 sliding further towards the inside of the platform 68 in a third position, where the tray 107 folds up around the hinge 108. The second panel 107b slides out of the third runner 103 and falls on the ejection chute 106. The cavity 16 comprising partial side walls 110 along the first panel 107a only, the cartridge 12 is not held within the cavity 16 anymore. The cartridge 12 is released from the cavity 16; it falls on the ejection chute 106 and slides down toward the ejection conduit 24 in the arm 69. While the cartridge 12 falls down on the ejection chute 106, the cut out part of the sheet 50 is pushed back toward the sheet 50 and partially closes the opening 35 of the cartridge 12. The infusible substances 14 are maintained within the cartridge 12.

The ejection mechanism to withdrawn the cartridge 12 allows to eject the cartridge smoothly. It prevents the infused substances 14 contained in the cartridge 12 from falling out of the cartridge 12. Some infused substances may still fall out of the cartridge 12 when it is dropped onto the ejection chute 108. They are collected on the ejection chute 108 in any case.

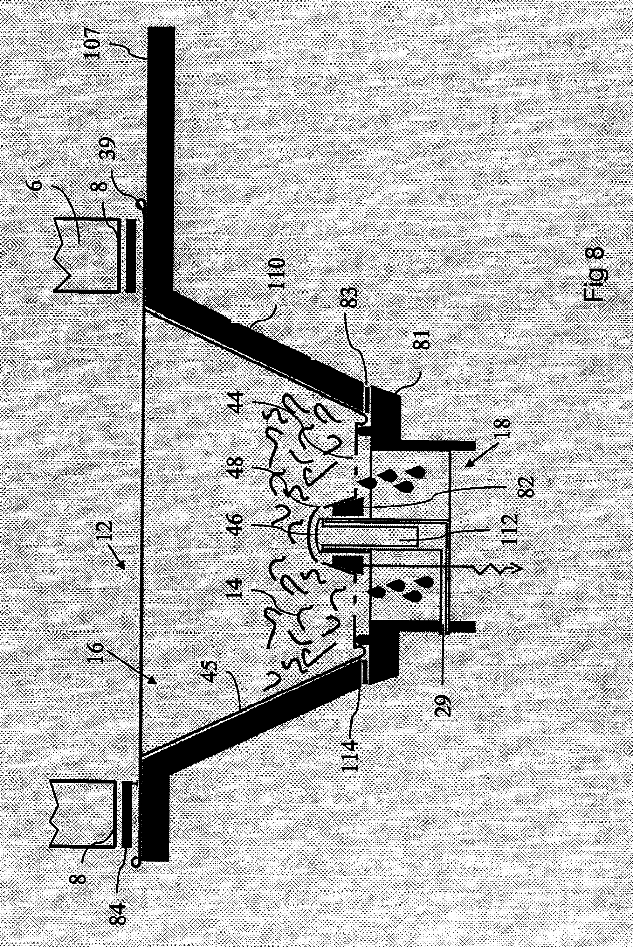

The drawer 10 and the insert 81 of another device in which the cartridge 12 according to the invention is used are now explained in respect with **figure 8**. A mechanism for detecting a cartridge 12 in the cavity 16 is also presented.

The drawer 10 comprises a tray 107 with a cavity 16 adapted to receive a cartridge 12. The cavity 16 comprises side walls 110 connected to the tray 107. The side walls 110 form a partial cone or cylinder, truncated at the bottom part. When a cartridge 12 is inserted in the cavity 16b, it is maintained in the cavity 16 through its lip resting upon the upper surface of tray 107; the side walls 45 of the cartridge 12 lay upon the side walls 110 of the cavity 16.

The device 2 further comprises a movable insert 81 located in the platform 68. The movement of the insert 81 is controlled by the operating means of the device 2. The insert 81 is operated to be brought to contact with the cavity of the tray 107. The insert 81 adapted to fit exactly together with the edges 114 of the side walls 110 of the cavity 16. A gasket 83 may be disposed either on the insert 81 or on the edges 114 of the side walls 110 to ensure a hermetic contact between the cavity 16 and the insert 81. The insert 81 is connected to the passage 18.

A protruding nozzle 112, preferably cylindrical or frustrocone-shaped, is located in the insert 81 towards the inside of the cavity 16. The protruding nozzle 112, provided with openings 113 for the ejection of gas, is connected to a conduit 29 located within the insert 81; the conduit 29 is connected to the inlet pipe 28.

The insert 81 comprises a detector to detect whether a cartridge 12 is slot in the cavity 16 or not. The detector comprises an actuating push-button 82, located around the protruding nozzle 112 and connected to the circuitry 25 of the device 2. The push-button 82 is able to slide up and down along the protruding nozzle 112. When pushed down, it actuates part of the functioning of the device 2. The push-button 82 is cone-shaped, truncated at the level of its top part. The diameter of the bottom section (at the level of the bottom part 42) of the recess 46 of a cartridge 12 is larger than that of the top section of the push-button 82. Preferably the angle of the cone of the recess 46 is substantially identical to that of the cone of the push-button 82.

Once the drawer 10 is closed within the platform 68 and once the tray 107 has been brought to contact with the bottom opening 8 of the infusion container 6, the insert 81 is operated to be brought to contact with the cavity 16, so the cavity 6 and the insert 81 fit exactly together. The cartridge 12 is firmly maintained in the cavity 16, its lip 39 between grasped between the upper surface of the tray 107 and the edge of the opening 8 of the infusion container 6. While the insert 81 is raised up, the protruding nozzle 112 and the push-button 82 move into the recess 46 of the cartridge 12. The outside side surface of the push-button 82 is brought into contact with the side surface of the recess 46.

The push-button 82 keeps on moving into the recess 46, sliding along the surface of the recess 46 until the push-button 82 is blocked between the surface of the recess 46 and the protruding nozzle 112. As the insert 81 keeps on sliding up, the push-button 82 is pressed down by the surface of the recess 46 of the cartridge 12; the push-button creates a new connection in the circuitry 25 for the actuation of a process in the device 2. Once the insert 81 is brought into contact to the edges 114 of the cavity 16, the protruding nozzle 112 is located inside the recess 46 of the cartridge 12, so that the openings 113 of the protruding nozzle 112 face the openings 48 of the recess 46.

Once the cartridge 12 is removed from the cavity 12 whether automatically or manually, it releases the push-button 82. Similarly, the release of the push-button 82 may control at least a step in the functioning of the device 2.

A cartridge according to another embodiment of the invention is now explained with respect to **figure 7F**. The bottom part 42 of the cartridge comprises a recess 46a towards the inside of the cartridge 12. The recess 46a consists of a first truncated cone 46a1, its larger section being at the level of the bottom part 42 of the cartridge 12 and of a second truncated cone or cylinder 46a2 "stacked" upon the first cone 46a1. The intersection between the first and second cone 46a1 and 46a2 constitutes an actuating surface 46b. The recess 46a2 comprises openings 48 for letting gas pass through.

The diameter of the bottom section of the recess 46a1 is larger than that of the top section of the push-button 82. Preferably the angle of the cone of the recess 46a1 is substantially identical to that of the cone of the push-button 82.

In use, when the insert 81 is raised up, the protruding nozzle 112 and the push-button 82 of the insert 81 move into the recess 46a1 of the cartridge 12. The outside side surface of the push-button 82 is brought into contact with the side surface of the recess 46a1. The push-button 82 slides along the surface of the recess 46a1 until being blocked by the actuating surface 46b. As the insert 81 keeps on sliding up, the push-button 82 is pressed down by the surface 46b; the push-button creates a new connection in the circuitry 25 for the actuation of a process in the device 2. Once the insert 81 is brought into contact to the edges 114 of the cavity 16, the protruding nozzle 112 is located inside the recess 46a2 of the cartridge 12, so that the openings 113 of the protruding nozzle 112 face the openings 48 of the recess 46a.

While various embodiments of the present invention have been described in detail, it is apparent that modifications and adaptations of those embodiments will occur to those skilled in the art. It is to be expressly understood, however, that such modifications and adaptations are within the scope of the present invention.

## Claims

1. Cartridge (12) for containing infusible substance (14) for use in a device for preparing an infused beverage (4), including:
a bottom part (42) provided with a filter (44) adapted to let liquid (4) pass through;
a top part (38) provided with an opening (35);
side walls (45) joining the bottom (42) and top (38) parts;
**characterized in that**
the bottom part (42) forms a recess (46) arranged toward the inside of the cartridge (12), the surface of the recess (46) comprising an actuating surface for actuating a mechanism of the device.

2. Cartridge (12) according to claim 1, wherein the recess (46) is provided with at least an opening (48) for letting gas pass through.

3. Cartridge (12) according to any of the preceding claims, wherein the opening of the top part (38) is provided with and closed by a extendable and/or deformable filter arranged toward the outside of the cartridge (12) with respect of the opening (35).

4. Cartridge (12) according to any of the preceding claims, wherein the opening of the top part (38) is provided with and closed by a sheet (36), arranged toward the outside of the cartridge (12) with respect of the opening (35).

5. Cartridge (12) according to any of the preceding claims, wherein the bottom part (42) is provided with and closed by a removable sheet (50), arranged toward the outside of the cartridge (12) with respect of the filter (44).

6. Cartridge (12) according to any of the preceding claims, wherein the recess (46) has a substantially cylindrical or frustroconical form defining recess side walls (52) and a recess top (54), and wherein the at least one opening (48) of the recess (46) is provided through the recess side walls (52), or/and through the recess top (54).

7. Cartridge (12) according to claim 6, wherein the bottom section of the recess (46) has a diameter comprised between 2 and 15 millimetres, or more particularly between 2 and 6 millimetres.

8. Cartridge (12) according to anyone of the preceding claims, having a substantially cylindrical or frustroconical form.

9. Cartridge (12) according to claim 8, wherein the angle (α) formed by the side walls (45) and the bottom part is comprised between 90 degrees and 100 degrees, or more particularly between 93 degrees and 97 degrees.

10. Cartridge (12) according to any of the claims 1 to 9, made of food contact approved aluminium or aluminium having its inner surface covered with a food contact approved coating and able to resist to temperatures at least up to 100°C during several minutes.
